# DEMANDE DE BREVET EUROPEEN

(11) **EP 3 764 373 A1**
(43) Date de publication de la demande: **13.01.2021**
(21) Numéro de dépôt: 20184928.8
(22) Date de dépôt: 09.07.2020
(51) Int. Cl.: H01B 7/295, H01B 3/10, H01B 3/12

(54) **CÂBLE COMPRENANT UNE COUCHE CÉRAMIQUE RÉSISTANTE AU FEU**

(30) Priorité: 12.07.2019 FR 1907864
(71) Demandeur: Nexans, 92400 Courbevoie (FR)
(72) Inventeur: AUVERGNE, Maxime, 42100 SAINT-ETIENNE (FR); GYPPAZ, Franck, 69003 LYON (FR)
(74) Mandataire: Ipsilon

(57) **Abrégé**

La présente invention concerne un câble, notamment d'énergie et/ou de télécommunication, comprenant au moins un élément électriquement conducteur allongé, et au moins une couche résistante au feu entourant ledit élément électriquement conducteur allongé, ladite couche résistante au feu étant une couche céramique en contact physique direct avec ledit élément électriquement conducteur allongé, un procédé de préparation d'un tel câble, une composition céramique liquide pour ledit câble, et l'utilisation de ladite composition céramique liquide pour améliorer la résistance au feu.

## Description

La présente invention concerne un câble, notamment un câble d'énergie et/ou de télécommunication, comprenant au moins un élément électriquement conducteur allongé, et au moins une couche résistante au feu entourant ledit élément électriquement conducteur allongé, ladite couche résistante au feu étant une couche céramique en contact physique direct avec ledit élément électriquement conducteur allongé, un procédé de préparation d'un tel câble, une composition céramique liquide pour ledit câble, et l'utilisation de ladite composition céramique liquide pour améliorer la résistance au feu.

Elle s'applique typiquement mais non exclusivement aux câbles de sécurité résistants au feu, notamment sans halogène, susceptibles de fonctionner pendant un laps de temps donné dans des conditions d'incendie, sans être pour autant propagateur d'incendie, ni générateur de fumées importantes. Ces câbles de sécurité sont en particulier des câbles de transport d'énergie, ou des câbles de transmission basse fréquence, tels que des câbles de contrôle ou de signalisation.

Un câble d'énergie et/ou de télécommunication est un câble destiné au transport de l'énergie et/ou à la transmission de données. Il peut comprendre un ou plusieurs éléments conducteurs (électrique(s) allongé(s), et éventuellement un ou plusieurs éléments conducteurs optique(s)) allongé(s), une ou plusieurs couche(s) électriquement isolante(s), et une gaine extérieure de protection destinée à protéger mécaniquement les éléments sous-jacents dudit câble.

Les matériaux pouvant être utilisés pour améliorer la résistance au feu d'une des couches ou de la gaine de protection dudit câble sont des matériaux composites à base de polymères, en particulier de polymères siliconés, et des charges ignifugeantes. Malgré la présence de telles charges, la résistance au feu ne donne pas toujours entièrement satisfaction.

De la demande internationale WO2017/199060 est connu un câble résistant au feu comprenant un élément conducteur allongé entouré par une couche céramifiable d'une composition céramifiable comprenant un mélange de polymères thermoplastiques comprenant (a) un copolymère d'éthylène et d'une alpha-oléfine ayant une densité de 0,860 à 0,910 g/cm³, un indice de fluidité à chaud (IFC) ne dépassant pas 3 g/10 minutes et un point de fusion d'au plus 105°C, (b) un homopolymère d'éthylène ou un copolymère d'éthylène et d'une alpha-oléfine ayant une densité de 0,900 à 0,985 g/cm³, un indice de fluidité à chaud (IFC) ne dépassant pas 5 g/10 minutes et un point de fusion d'au plus 110°C, et (c) un polyéthylène substitué par un monomère comportant un insaturation éthylénique ; au moins 25 % en poids de silice ; un agent de fluxage choisi parmi les oxydes métaux alcalins et leurs précurseurs ; un hydroxyde inorganique tel que l'hydroxyde de magnésium, l'hydroxyde d'aluminium ou leur mélange ; et au moins 5 % en poids d'un agent stabilisant à base de silicate de magnésium hydraté. Cette couche céramifiable peut constituer la couche externe du câble (gaine externe) ou bien le matériau de remplissage (ou « *bedding* » en anglais) entre les éléments conducteurs isolés et la gaine externe. Lorsque cette couche céramifiable est exposée à des températures élevées telles que celles occasionnées par les incendies, elle réagit pour former une couche céramique résistante au feu. Toutefois, la couche céramifiable présente un encombrement non négligeable, et les propriétés de résistance au feu ne sont pas optimisées.

Le but de la présente invention est de fournir un câble, notamment un câble d'énergie ou de télécommunication, présentant une résistance au feu améliorée, et de préférence ayant un encombrement diminué.

L'invention a pour premier objet un câble comprenant au moins un élément électriquement conducteur allongé, et au moins une couche résistante au feu entourant ledit élément électriquement conducteur allongé, caractérisé en ce que ladite couche résistante au feu est une couche céramique en contact physique direct avec ledit élément électriquement conducteur allongé, et ladite couche céramique est obtenue par traitement thermique d'une composition céramique liquide.

Grâce à la couche céramique du câble de l'invention en contact physique direct avec ledit élément électriquement conducteur allongé, ladite couche céramique étant obtenue par traitement thermique d'une composition céramique liquide, le câble présente une résistance au feu améliorée, et un encombrement diminué. Par ailleurs, ledit câble peut être utilisé en tant que câble de télécommunication. Enfin, le câble de l'invention présente, à l'issue de sa fabrication, toutes les propriétés pour résister à un incendie ou à des températures plus faibles que celles atteintes en cas d'incendie, ce qui n'est pas le cas des câbles à base de couche(s) céramifiable(s) qui nécessitent une transformation de la couche céramifiable en couche céramique lors d'un incendie pour permettre une résistance au feu.

### La couche céramique

Dans la présente invention, l'expression « en contact physique direct » signifie qu'aucune couche, de quelque nature que ce soit, ne vient s'intercaler entre ledit élément électriquement conducteur allongé et ladite couche céramique. En d'autres termes, le câble ne comprend pas de couche(s) intermédiaire(s), notamment de couche(s) comprenant au moins un polymère, positionnée(s) entre ledit élément électriquement conducteur allongé et ladite couche céramique.

Une couche dite de « passivation » formée par oxydation, par exemple à l'air ou par traitement de surface de l'élément électriquement conducteur allongé, n'est pas considérée comme une couche s'intercalant ou positionnée entre ledit élément électriquement conducteur allongé et ladite couche céramique. En d'autres termes, l'élément électriquement conducteur allongé peut comprendre une couche de passivation. De ce fait, la couche céramique peut être en contact physique direct avec la couche de passivation de l'élément électriquement conducteur allongé.

La couche céramique du câble de l'invention est une couche qui est à l'état de céramique. En d'autres termes elle est déjà sous la forme d'une céramique avant toute exposition à des flammes ou un incendie. La couche céramique du câble de l'invention est notamment destinée à résister à un incendie.

La couche céramique du câble de l'invention est obtenue par traitement thermique d'une composition céramique liquide.

Le traitement thermique de la composition céramique liquide est réalisé de préférence à une température d'au plus 1100°C, de façon particulièrement préférée d'au plus 1050°C environ, de façon plus particulièrement préférée d'au plus 1000°C environ, et de façon encore plus particulièrement préférée d'au plus 950°C environ.

Le traitement thermique de la composition céramique liquide peut être réalisé à une température d'au moins 700°C environ, de façon particulièrement préférée d'au moins 750°C environ, et de façon plus particulièrement préférée d'au moins 800°C environ.

Selon une forme de réalisation préférée de l'invention, la couche céramique est obtenue par frittage de la composition céramique liquide, c'est-à-dire par consolidation par action de la chaleur de la composition céramique liquide. En d'autres termes, le frittage est un procédé consistant à chauffer la composition céramique liquide sans mener les ingrédients solides jusqu'à la fusion. Sous l'effet de la chaleur, les grains se soudent entre eux, ce qui forme la cohésion de la couche céramique. Le frittage peut permettre de mieux contrôler la densification de la composition céramique liquide.

La couche céramique est de préférence obtenue par frittage conventionnel, par exemple à l'aide d'un four.

Dans un mode de réalisation particulier, la couche céramique est obtenue par frittage de la composition céramique liquide à pression atmosphérique.

La couche céramique du câble de l'invention peut avoir une épaisseur allant de 5 à 30 µm environ, de préférence de 10 à 25 µm environ, et de façon particulièrement préférée de 15 à 20 µm environ.

L'épaisseur de ladite couche résistante au feu n'a pas d'impact significatif sur le diamètre du câble, ce qui présente un grand avantage en termes de design du câble.

La couche céramique est de préférence une couche inorganique. En d'autres termes, elle comprend au moins 80% en poids de constituant(s) inorganique(s), de préférence au moins 90% en poids de constituant(s) inorganique(s), de façon particulièrement préférée au moins 95% en poids de constituant(s) inorganique(s), et de façon particulièrement préférée la couche céramique comprend uniquement un ou plusieurs constituant(s) inorganique(s).

Dans l'invention, l'expression « constituant inorganique » signifie un constituant exempt de liaison(s) carbone-hydrogène, et/ou l'expression « constituant inorganique » signifie un constituant intégrant un ou plusieurs atomes métalliques dans sa structure.

Ladite couche céramique est de préférence une couche électriquement isolante.

Selon la présente invention, l'expression « couche électriquement isolante » signifie une couche dont la conductivité électrique peut être d'au plus 1.10⁻⁸ S/m (siemens par mètre) environ, de préférence d'au plus 1.10⁻⁹ S/m, et de façon particulièrement préférée d'au plus 1.10⁻¹⁰ S/m (Siemens par mètre), mesurée à 25°C en courant continu.

La couche étant de préférence une couche électriquement isolante, elle ne comprend généralement pas de particules de métal conducteur au degré d'oxydation zéro et/ou de charges conductrices.

### La composition céramique liquide

La composition céramique liquide est une composition liquide. En d'autres termes, la composition céramique est une composition liquide à température ambiante, par exemple à une température allant de 18 à 25°C environ.

La composition céramique liquide comprend au moins un matériau céramique, de préférence un matériau céramique comprenant au moins du silicium, de l'aluminium, et de l'oxygène.

Le matériau céramique est de préférence sous la forme d'une poudre.

Le matériau céramique peut représenter de 30 à 60% en poids environ, et de préférence de 40 à 55% en poids environ, par rapport au poids total de la composition céramique liquide.

La composition céramique liquide comprend de préférence en outre de l'eau. En d'autres termes, la composition céramique liquide est de préférence une composition aqueuse.

L'eau peut représenter au moins 35% en poids environ, et de préférence au moins 40% en poids environ, par rapport au poids total de la composition céramique liquide. Une telle quantité d'eau minimale peut permettre de faciliter l'application de la composition céramique liquide sur l'élément électriquement conducteur allongé.

L'eau peut représenter au plus 70% en poids environ, et de préférence au plus 60% en poids environ, par rapport au poids total de la composition céramique liquide.

Selon une forme de réalisation préférée de l'invention, la composition céramique liquide a une viscosité allant de 5x10⁻⁵ à 7x10⁻⁵ m²/s (50 à 70 centistokes), et de façon particulièrement préférée allant de 5,5x10⁻⁵ à 6,5x10⁻⁵ m²/s (55 à 65 centistokes), ladite viscosité étant mesurée selon la coupe de viscosité Ford, de préférence selon la norme ASTM D1200.

La composition céramique liquide peut comprendre en outre au moins un agent plastifiant, et de préférence au moins un agent plastifiant inorganique. L'agent plastifiant peut permettre d'augmenter la viscosité de la composition céramique liquide.

L'agent plastifiant peut être par exemple de la bentonite.

L'agent plastifiant peut représenter de 0,1 à 5,0% en poids environ, de préférence de 0,6 à 2,0% en poids environ, et de façon particulièrement préférée de 1,0 à 1,8% en poids environ, par rapport au poids total de la composition céramique liquide.

L'agent plastifiant est de préférence sous la forme d'une poudre dans la composition céramique liquide.

La composition céramique liquide peut comprendre en outre au moins un premier agent anti-floculation, et de préférence un premier agent anti-floculation inorganique. Le premier agent anti-floculation peut permettre d'améliorer l'homogénéisation de ladite composition.

Le premier agent anti-floculation peut être choisi parmi les sels inorganiques tels que l'hexafluorosilicate de sodium, les oxydes d'alcalino-terreux tels que de l'oxyde de magnésium, et un de leurs mélanges.

Parmi les oxydes de magnésium, la magnésie calcinée légère est particulièrement préférée. En effet, elle peut permettre une meilleure réactivité.

Le premier agent anti-floculation (ou les premiers agents anti-floculation s'il y en a plusieurs) peut représenter de 0,1 à 10,0% en poids environ, de préférence de 1,0 à 7,0% en poids environ, et de façon particulièrement préférée de 2,0 à 6,0% en poids environ, par rapport au poids total de la composition céramique liquide.

Le premier agent anti-floculation est de préférence sous la forme d'une poudre dans la composition céramique liquide.

La composition céramique liquide comprend de préférence au plus 5% en poids de polymère(s) organique(s), de façon particulièrement préférée au plus 1% en poids de polymère(s) organique(s), et de façon plus particulièrement préférée ne comprend pas de polymère(s) organique(s), par rapport au poids total de la composition céramique liquide.

Selon une forme de réalisation particulièrement préférée de l'invention, la composition céramique liquide est une composition céramique inorganique, le terme « inorganique » étant tel que défini dans l'invention.

### Matériau céramique

Dans un mode de réalisation de l'invention, le matériau céramique est obtenu à partir d'une composition céramifiable solide.

Le matériau céramique peut être obtenu par des méthodes bien connues de l'homme du métier, par exemple par traitement thermique à une température d'au moins 1000°C environ, de préférence à une température d'au moins 1100°C environ, et de façon particulièrement préférée à une température d'au moins 1150°C environ.

Le traitement thermique peut être un procédé de fusion.

La composition céramifiable solide comprend de préférence au moins un oxyde de métal.

La composition céramifiable solide peut comprendre au moins 15% en poids environ d'oxyde(s) de métal(aux), et de préférence au moins 20% en poids environ d'oxyde(s) de métal(aux), par rapport au poids total de ladite composition céramifiable solide.

La composition céramifiable solide peut comprendre au plus 55% en poids environ d'oxyde(s) de métal(aux), et de préférence au plus 50% en poids environ d'oxyde(s) de métal(aux), par rapport au poids total de ladite composition céramifiable solide.

La composition céramifiable solide comprend de préférence au moins un oxyde de silicium, et au moins un oxyde d'aluminium.

L'oxyde d'aluminium peut représenter de 1 à 35% en poids environ, et de préférence de 3 à 25% en poids environ, par rapport au poids total de la composition céramifiable solide.

L'oxyde de silicium peut représenter de 10 à 40% en poids environ, et de préférence de 13 à 35% en poids environ, par rapport au poids total de la composition céramifiable solide.

La composition céramique solide peut comprendre en outre un agent fondant, et de préférence un agent fondant inorganique. L'agent fondant peut permettre d'améliorer la formation du matériau céramique, notamment en diminuant la température de fusion de la composition céramifiable solide.

L'agent fondant peut être choisi parmi l'acide borique déshydraté, un oxyde métallique tel que l'oxyde de plomb, l'oxyde de zinc, l'oxyde de bismuth, ou le bisilicate de plomb, et un de leurs mélanges.

L'agent fondant (ou les agents fondants lorsqu'il y en a plusieurs) peut représenter de 20 à 50% en poids environ, par rapport au poids total de la composition céramifiable solide.

La composition céramifiable solide peut comprendre en outre un agent densificateur, et de préférence un agent densificateur inorganique, tel que le dioxyde de titane. L'agent densificateur peut permettre de réduire la porosité de la composition céramifiable solide et de la couche céramique.

L'agent densificateur peut représenter de 3 à 10% en poids environ, par rapport au poids total de la composition céramifiable solide.

La composition céramifiable solide peut comprendre en outre un liant, et de préférence un liant inorganique, tel que le dioxyde de manganèse. Le liant peut permettre d'obtenir une composition céramifiable solide homogène.

Le liant peut représenter de 0,2 à 2% en poids environ, par rapport au poids total de la composition céramifiable solide.

La composition céramifiable solide peut comprendre en outre un agent stabilisant, et de préférence un agent stabilisant inorganique, tel qu'un carbonate de métal. Le carbonate de calcium est particulièrement préféré. L'agent stabilisant peut permettre d'obtenir une composition céramifiable solide stable.

L'agent stabilisant peut représenter de 5 à 15% en poids environ, par rapport au poids total de la composition céramifiable solide.

La composition céramifiable solide peut comprendre en outre au moins un deuxième agent anti-floculation, et de préférence un deuxième agent anti-floculation inorganique. Le deuxième agent anti-floculation peut permettre d'améliorer l'homogénéisation de la composition.

Le deuxième agent anti-floculation peut être choisi parmi les sels inorganiques tels que l'hexafluorosilicate de sodium, les oxydes d'alcalino-terreux tels que de l'oxyde de magnésium, et un de leurs mélanges.

Parmi les oxydes de magnésium, la magnésie calcinée légère est particulièrement préférée. En effet, elle peut permettre une meilleure réactivité.

Le deuxième agent anti-floculation (ou les deuxième agents anti-floculation lorsqu'il y en a plusieurs) peut représenter de 0,5 à 25% en poids environ, et de préférence de 5 à 22% en poids environ, par rapport au poids total de la composition céramique solide.

### Le câble

Le câble est de préférence un câble électrique.

L'élément électriquement conducteur allongé du câble de l'invention peut avoir une température de fusion d'au moins 900°C environ, de préférence d'au moins 950°C environ, de façon particulièrement préférée d'au moins 1000°C environ, et de façon plus particulièrement préférée d'au moins 1050°C environ.

Selon une forme de réalisation préférée, l'élément électriquement conducteur allongé est en cuivre ou en alliage de cuivre tel qu'un alliage de cuivre et de nickel.

Le câble conforme à la présente invention peut comprendre une pluralité d'éléments électriquement conducteurs allongés. Dans ce cas, chacun des éléments électriquement conducteurs allongés est individuellement entouré par au moins une couche résistante au feu telle définie précédemment, chacune desdites couches étant en contact physique direct avec chacun desdits éléments électriquement conducteurs allongés.

De préférence, le câble comprend au moins une paire torsadée d'éléments électriquement conducteurs allongés, chacun des éléments électriquement conducteurs allongés étant individuellement entouré par au moins une couche résistante au feu telle définie précédemment, chacune desdites couches étant en contact physique direct avec chacun desdits éléments électriquement conducteurs allongés. En d'autres termes, le câble est un câble de télécommunications de type câble LAN (bien connu sous l'anglicisme « *Local Area Network* »). À titre d'exemples, le câble peut être un câble de type UTP, SFTP, etc...

Selon une forme de réalisation particulièrement préférée de l'invention, le câble comprend une pluralité de paires torsadées d'éléments électriquement conducteurs allongés telles que définies précédemment.

Le ou les élément(s) électriquement conducteur(s) allongé(s) peu(ven)t présenter une section transversale allant de 0,002 à 1 mm² environ, et de préférence allant de 0,004 à 0,5 mm² environ.

Selon une forme de réalisation particulière et préférée de la présente invention, le câble comprend en outre au moins une couche polymère entourant ladite couche résistante au feu.

Ladite couche polymère est de préférence une couche électriquement isolante.

Selon une forme de réalisation particulièrement préférée de l'invention, la couche polymère comprend un matériau polymère choisi parmi les polymères réticulés et non réticulés, les polymères du type inorganique et du type organique.

Le matériau polymère peut en particulier être un homopolymère ou un copolymère ayant des propriétés thermoplastiques et/ou élastomères.

Les polymères du type inorganique peuvent être des polyorganosiloxanes.

Les polymères du type organique peuvent être des polyoléfines, des polyuréthanes, des polyamides, des polyesters, des polyvinyliques ou des polymères halogénés tels que des polymères fluorés (e.g. polytétrafluoroéthylène PTFE) ou des polymères chlorés (e.g. polychlorure de vinyle PVC).

Les polyoléfines peuvent être choisies parmi les polymères d'éthylène et de propylène. A titre d'exemple de polymères d'éthylène, on peut citer les polyéthylènes linéaires basse densité (LLDPE), les polyéthylènes basse densité (LDPE), les polyéthylènes moyenne densité (MDPE), les polyéthylènes haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR), les copolymères d'éthylène/éthyle acrylate (EEA), ou les terpolymères d'éthylène et de propylène (EPT) tels que par exemple les terpolymères d'éthylène propylène diène monomère (EPDM).

Selon la présente invention, l'expression « polyéthylène basse densité » signifie un polyéthylène ayant une densité allant de 0,91 à 0,925 environ, ladite densité étant mesurée selon la norme ISO 1183A (à une température de 23°C).

Selon la présente invention, l'expression « polyéthylène moyenne densité » signifie un polyéthylène ayant une densité allant de 0,926 à 0,940 environ, ladite densité étant mesurée selon la norme ISO 1183A (à une température de 23°C).

Selon la présente invention, l'expression « polyéthylène haute densité » signifie un polyéthylène ayant une densité allant de 0,941 à 0,965 environ, ladite densité étant mesurée selon la norme ISO 1183A (à une température de 23°C).

La couche polymère est, de préférence, une couche extrudée par des techniques bien connues de l'homme du métier.

Lorsque le câble comprend une pluralité d'éléments électriquement conducteurs allongés, chacun des éléments électriquement conducteurs allongés étant individuellement entouré par au moins une couche résistante au feu telle définie précédemment, chacune desdites couches étant en contact physique direct avec chacun desdits éléments électriquement conducteurs allongés, la couche polymère peut entourer la pluralité d'éléments électriquement conducteurs allongés isolés.

Dans un autre mode de réalisation, le câble comprend une pluralité de couches polymères, chacune des couches polymères entourant chacun des éléments électriquement conducteurs allongés isolés.

Le câble conforme à la présente invention peut en outre comporter une gaine de protection. Dans ce cas, ladite gaine de protection est de préférence la couche la plus externe dudit câble.

Avantageusement, ladite gaine de protection entoure la ou les couches polymère(s).

La gaine externe de protection est de préférence réalisée en un matériau exempt d'halogène. Elle peut être réalisée classiquement à partir de matériaux retardant la propagation de la flamme ou résistant à la propagation de la flamme. Notamment, si ces derniers ne contiennent pas d'halogène, on parle de gainage de type HFFR (pour l'anglicisme « *Halogen Free Flame Retardant* »)*.*

Elle comprend au moins un polymère organique ou inorganique.

Le choix du polymère organique ou inorganique n'est pas limitatif et ceux-ci sont bien connus de l'homme du métier.

Selon une forme de réalisation préférée de l'invention, le polymère organique ou inorganique est choisi parmi les polymères réticulés et non réticulés.

Le polymère organique ou inorganique peut être un homo- ou un co-polymère ayant des propriétés thermoplastiques et/ou élastomères.

Les polymères inorganiques peuvent être des polyorganosiloxanes.

Les polymères organiques peuvent être des polyuréthanes ou des polyoléfines identiques à ceux définis ci-dessus pour la couche polymère électriquement isolante.

Le polymère de ladite gaine est de préférence un polymère organique, de préférence encore un polymère d'éthylène, et de préférence encore un copolymère d'éthylène et d'acétate de vinyle, un polyéthylène linéaire basse densité ou un de leurs mélanges.

La gaine externe de protection peut comprendre en outre une charge minérale ignifugeante hydratée. Cette charge minérale ignifugeante hydratée agit principalement par voie physique en se décomposant de manière endothermique (e.g. libération d'eau), ce qui a pour conséquence d'abaisser la température de la gaine et de limiter la propagation des flammes le long du câble. On parle notamment de propriétés de retard à la flamme, bien connues sous l'anglicisme « *flame retardant ».*

La charge minérale ignifugeante hydratée peut être un hydroxyde métallique tel que l'hydroxyde de magnésium ou le trihydroxyde d'aluminium.

La gaine externe de protection peut comprendre en outre une charge inerte, notamment choisi parmi le talc, les micas, la craie, les argiles déshydratées, et un de leurs mélanges.

### Procédé de fabrication du câble

L'invention a pour deuxième objet un procédé de fabrication d'un câble conforme au premier objet de l'invention, caractérisé en ce qu'il comprend au moins les étapes suivantes :
i) appliquer la composition céramique liquide directement autour d'au moins un élément électriquement conducteur allongé du câble, et
ii) traiter thermiquement la composition céramique liquide, pour obtenir la couche céramique.

La composition céramique liquide est telle que définie dans le premier objet de l'invention.

Le procédé peut comprendre en outre préalablement à l'étape i), une étape i0) de préparation de la composition céramique liquide.

### Etape i0)

Selon une forme de réalisation préférée de l'invention, l'étape i0) comprend les sous-étapes suivantes :
- préparer le matériau céramique à partir de la composition céramifiable solide, et
- mélanger le matériau céramique avec l'eau, l'agent plastifiant, et le premier agent anti-floculation.

De préférence, le matériau céramique est préparé par mélange de l'oxyde de silicium avec l'oxyde d'aluminium, et éventuellement avec l'agent fondant, le deuxième agent anti-floculation, l'agent stabilisant, le liant, et/ou l'agent densificateur, pour former la composition céramifiable solide, puis par traitement thermique de la composition céramifiable solide.

Le traitement thermique est tel que défini dans le premier objet de l'invention. Il permet d'obtenir le matériau céramique à partir de la composition céramifiable solide.

À l'issue du traitement thermique, le matériau céramique ainsi obtenu peut être refroidi à température ambiante, de préférence pour former une masse solide.

Le matériau céramique sous la forme d'une masse solide est de préférence broyé, notamment à l'aide d'une jarre de broyage comprenant des billes d'alumine. Cela permet ainsi de former une poudre.

Le mélange du matériau céramique avec l'eau, l'agent plastifiant, et le premier agent anti-floculation est généralement effectué par mélange de l'eau, l'agent plastifiant, et le premier agent anti-floculation, puis ajout du matériau céramique au mélange précédent.

### Etape i)

L'étape i) est de préférence effectuée par enduction, et de façon particulièrement préférée par trempage, par exemple à l'aide d'un bain contenant ladite composition céramique liquide.

L'étape i) est de préférence effectuée sous agitation. Cela permet ainsi de conserver l'homogénéité de la composition céramique liquide.

### Etape ii)

Le traitement thermique est tel que défini dans le premier objet de l'invention, et il permet d'obtenir la couche céramique à partir de la composition céramique liquide.

Le traitement thermique est de préférence effectué à l'aide d'un four, de préférence d'un four tubulaire.

Avant l'étape i), le ou les éléments électriquement conducteurs allongés peuvent être soumis à un traitement de surface, de préférence à une oxydation de surface. Cela permet ainsi de favoriser l'adhésion de la couche céramique sur le ou les éléments électriquement conducteurs allongés.

L'oxydation de surface peut être effectuée par traitement acide des éléments électriquement conducteurs allongés, notamment en présence d'un courant électrique.

L'invention a pour troisième objet une composition céramique liquide, notamment pour un câble conforme au premier objet de l'invention, caractérisée en ce qu'elle comprend :
- au moins un matériau céramique comprenant de l'aluminium, du silicium et de l'oxygène,
- au moins un premier agent anti-floculation,
- au moins un agent plastifiant, et
- de l'eau.

La composition céramique liquide, le premier agent anti-floculation, l'agent plastifiant, l'eau, et le matériau céramique sont tels que définis dans le premier objet de l'invention.

La composition céramique liquide est notamment destinée à être appliquée autour d'au moins un élément électriquement conducteur allongé du câble conforme au premier objet de l'invention.

L'invention a pour quatrième objet l'utilisation d'une composition céramique liquide conforme au troisième objet de l'invention, pour améliorer la résistance au feu d'un câble d'énergie et/ou de télécommunication.

### Exemple

Un matériau céramique sous la forme d'une poudre a été préparé de la façon suivante :
300 g d'oxyde de silicium ont été mélangés avec 100 g d'oxyde d'aluminium, 110 g d'oxyde de plomb et 440 g d'acide borique déshydraté en tant qu'agents fondants, 220 g d'oxyde de magnésium et 10 g d'hexafluorosilicate de sodium en tant que deuxièmes agents anti-floculation, 90 g de dioxyde de titane en tant qu'agent densificateur, 140 g de carbonate de calcium en tant qu'agent stabilisant, et 10 g de dioxyde de manganèse en tant que liant, pour former une composition céramifiable solide.

La composition céramifiable solide résultante a alors été traitée thermiquement à 1200°C (procédé de fusion), coulée dans un moule en verre, puis refroidie à température ambiante pour former un matériau céramique solide. Le matériau céramique solide a été broyé pour former une poudre céramique.

1000 g de la poudre céramique ont ensuite été mélangés avec 1000 g d'eau, 30 g de bentonite en tant qu'agent plastifiant, 50 g d'oxyde de magnésium et 30 g d'hexafluorosilicate de sodium en tant que premiers agents anti-floculation, pour former une composition céramique liquide.

Un élément électriquement conducteur allongé en cuivre de 0,2 mm² de section transversale a été trempé dans un bain comprenant la composition céramique liquide, puis l'élément électriquement conducteur allongé trempé a été traité thermiquement par frittage à l'aide d'un four tubulaire à une température de 850°C, afin de former une couche céramique résistante au feu autour de l'élément électriquement conducteur allongé du câble.

La couche céramique ainsi formée satisfait aux exigences des normes suivantes : NF C 32070 cat. CR1, EN 50200 (IEC 60331-2) 2h, et IEC 60331-11-23.

## Revendications

1. Câble comprenant au moins un élément électriquement conducteur allongé et au moins une couche résistante au feu entourant ledit élément électriquement conducteur allongé, **caractérisé en ce que** ladite couche résistante au feu est une couche céramique en contact physique direct avec ledit élément électriquement conducteur allongé, et ladite couche céramique est obtenue par traitement thermique d'une composition céramique liquide.

2. Câble selon la revendication 1, **caractérisé en ce que** le traitement thermique est réalisé à une température d'au plus 1100°C.

3. Câble selon la revendication 1 ou 2, **caractérisé en ce que** le traitement thermique est réalisé à une température d'au moins 700°C.

4. Câble selon l'une quelconque des revendications précédentes, **caractérisé en ce que** la couche céramique est une couche inorganique.

5. Câble selon l'une quelconque des revendications précédentes, **caractérisé en ce que** la composition céramique liquide comprend au moins un matériau céramique.

6. Câble selon la revendication 5, **caractérisé en ce que** la composition céramique liquide comprend en outre de l'eau.

7. Câble selon la revendication 5 ou 6, **caractérisé en ce que** la composition céramique liquide comprend en outre au moins un agent plastifiant.

8. Câble selon l'une quelconque des revendications 5 à 7, **caractérisé en ce que** la composition céramique liquide comprend en outre au moins un premier agent anti-floculation.

9. Câble selon l'une quelconque des revendications 5 à 8, **caractérisé en ce que** le matériau céramique est obtenu à partir d'une composition céramifiable solide comprenant au moins 15% en poids d'oxyde(s) de métal(aux), par rapport au poids total de ladite composition céramifiable solide.

10. Câble selon la revendication 9, **caractérisé en ce que** la composition céramifiable solide comprend au moins un oxyde de silicium, et au moins un oxyde d'aluminium.

11. Câble selon l'une quelconque des revendications précédentes, **caractérisé en ce que** la composition céramique liquide a une viscosité allant de 5x10⁻⁵ à 7x10⁻⁵ m²/s (50 à 70 centistokes), ladite viscosité étant mesurée selon la coupe de viscosité Ford.

12. Câble selon l'une quelconque des revendications précédentes, **caractérisé en ce que** l'élément électriquement conducteur allongé a une température de fusion d'au moins 900°C.

13. Câble selon l'une quelconque des revendications précédentes, **caractérisé en ce qu'**il comprend en outre au moins une couche polymère entourant la couche résistante au feu.

14. Câble selon la revendication 13, **caractérisé en ce que** la couche polymère est une couche électriquement isolante.

15. Procédé de fabrication d'un câble tel que défini à l'une quelconque des revendications précédentes, **caractérisé en ce qu'**il comprend au moins les étapes suivantes :
i) appliquer la composition céramique liquide directement autour d'au moins un élément électriquement conducteur allongé du câble, et
ii) traiter thermiquement la composition céramique liquide pour obtenir la couche céramique.

16. Procédé selon la revendication 15, **caractérisé en ce que** le traitement thermique est effectué à une température d'au plus 1100°C, et à la pression atmosphérique.

17. Procédé selon la revendication 15 ou 16, **caractérisé en ce que** le procédé comprend en outre avant l'étape i), une étape au cours de laquelle l'élément électriquement conducteur allongé est soumis à un traitement de surface.

18. Composition céramique liquide pour un câble tel que défini à l'une quelconque des revendications 1 à 14, **caractérisée en ce qu'**elle comprend :
- au moins un matériau céramique comprenant de l'aluminium, du silicium et de l'oxygène,
- au moins un premier agent anti-floculation,
- au moins un agent plastifiant, et
- de l'eau.

19. Utilisation d'une composition céramique liquide selon la revendication 18, pour améliorer la résistance au feu d'un câble d'énergie et/ou de télécommunication.
